# FASCICULE DE BREVET EUROPEEN

(11) **EP 3 049 663 B1**
(45) Date de publication et mention de la délivrance du brevet: **01.03.2017**
(21) Numéro de dépôt: 14793216.4
(22) Date de dépôt: 23.09.2014
(51) Int. Cl.: F02K 1/72, F02K 1/76

(54) **INVERSEUR DE POUSSÉE POUR UNE NACELLE DE TURBORÉACTEUR, COMPRENANT UNE BUTÉE DE FIN DE COURSE SUR LE RAIL DE GUIDAGE PRIMAIRE**
SCHUBUMKEHRER FÜR EINE TL-TRIEBWERKSGONDEL MIT EINEM ANSCHLAG AUF DER HAUPTFÜHRUNGSSCHIENE
THRUST REVERSER FOR A TURBOJET POD, INCLUDING AN END STOP ON THE MAIN GUIDE RAIL

(30) Priorité: 23.09.2013 FR 1359104
(43) Date de publication de la demande: 03.08.2016
(73) Titulaire: Safran Nacelles, 76700 Gonfreville-l'Orcher (FR)
(72) Inventeur: LONCLE, Alexis, F-76600 Le Havre (FR)
(74) Mandataire: Gaillarde, Frédéric F. Ch.
(86) Numéro de dépôt international: PCT/FR2014/052370
(87) Numéro de publication internationale: WO 2015/040347

(56) Documents cités:
- EP-A1- 1 286 037
- EP-A1- 1 298 309
- US-A- 3 036 431
- US-A- 4 145 877
- US-A1- 2011 259 435

## Description

La présente invention concerne un inverseur de poussée pour une nacelle d'aéronef recevant un turboréacteur, ainsi qu'une nacelle d'aéronef équipée d'un tel inverseur de poussée.

Les ensembles de motorisation pour les aéronefs comportent généralement une nacelle formant une enveloppe extérieure globalement circulaire, comprenant à l'intérieur un turboréacteur disposé suivant l'axe longitudinal de cette nacelle.

Le turboréacteur reçoit de l'air frais venant du côté amont ou avant, et rejette du côté aval ou arrière les gaz chauds issus de la combustion du carburant, qui donnent une certaine poussée. Pour les turboréacteurs à double flux, des aubes de soufflante disposées autour de ce turboréacteur génèrent un flux secondaire important d'air froid le long d'une veine annulaire passant entre le moteur et la nacelle, qui ajoute une poussée élevée.

Les nacelles peuvent comporter un système d'inversion de poussée qui ferme au moins en partie la veine annulaire d'air froid, et rejette le flux secondaire vers l'avant afin de générer une poussée de freinage de l'aéronef.

Certains inverseurs de poussée comportent des capots mobiles aval qui peuvent coulisser axialement vers l'arrière sous l'effet d'actionneurs, en déployant des volets dans la veine annulaire afin de fermer au moins partiellement cette veine. Les volets renvoient le flux d'air froid radialement vers l'extérieur en passant par des grilles découvertes lors de ce coulissement, comprenant des aubes qui dirigent ce flux vers l'avant.

En particulier l'inverseur peut comporter un seul capot appelé aussi « O-duct », formant une virole formant transversalement un cercle complet. En variante l'inverseur peut comporter deux capots disposés symétriquement par rapport à un plan vertical, formant chacun un demi-cercle appelé aussi « D-duct », ce qui permet de constituer une virole complète.

Le recul des capots est réalisé par des vérins de commande de l'inverseur pour le fonctionnement normal de l'inverseur, ou pour accéder aux parties intérieures de la nacelle afin de réaliser des opérations de maintenance sur la motorisation.

Chaque capot comporte un panneau intérieur supporté et guidé axialement par un rail primaire disposé longitudinalement dans la nacelle, comprenant une partie mobile liée au capot, coulissant sur une partie fixe liée à la structure amont. Ces rails primaires disposent d'une résistance élevée pour supporter pratiquement l'ensemble de la masse ainsi que les différentes contraintes appliquées sur l'inverseur lors de son fonctionnement.

Les capots comportent aussi des rails secondaires de guidage de la partie avant du panneau extérieur de ces capots, qui se trouve en porte-à-faux au-dessus des grilles d'inversion du flux, pour éviter une flexion de ces parties.

Certains demi-capots du type « D-duct » comportent deux vérins de commande fixés en un point supérieur et un point inférieur de chaque capot, les deux capots n'étant pas liés entre eux par une liaison supérieure. En cas d'absence ou de rupture pendant le vol, du vérin supérieur d'un capot qui est ouvert, la partie haute de ce capot n'est alors plus suffisamment retenue pour résister à la masse et aux pressions importantes s'exerçant dessus. Ce capot peut se déformer ou basculer suffisamment avec un recul de sa partie supérieure, pour déboîter le rail secondaire.

On peut obtenir le même problème dans le cas d'une absence ou d'une rupture du vérin inférieur, si les deux capots ne comportent pas de liaison inférieure entre eux deux. On peut aussi l'obtenir avec des capots maintenus par trois vérins, si l'ensemble ne comporte pas une forte rigidité.

De la même manière, un unique capot du type « O-duct » peut aussi dans le cas d'absence ou de rupture d'un vérin de commande, se déformer et basculer suffisamment pour déboîter le rail secondaire.

Pour éviter ce problème de désengagement du rail secondaire, il est connu de disposer une butée de fin de course sur ce rail afin d'empêcher son déboitement en cas de recul important du capot supporté.

Le document EP1298309 divulgue un système de verrouillage sur un inverseur de poussée à grilles.

Toutefois les rails secondaires comprenant généralement une structure légère suffisante pour un guidage des parties extérieures des capots lors de l'ouverture de l'inverseur, pour son fonctionnement ou pour des opérations de maintenance, ne sont pas prévus pour résister aux fortes charges axiales appliquées sur une butée de fin de course fixée sur ces rails, qui peuvent apparaître en cas d'absence ou de rupture d'un vérin, lors du fonctionnement de l'inverseur de poussée. Il faut alors renforcer ces rails secondaires, ce qui augmente la masse ainsi que les coûts.

La présente invention a notamment pour but d'éviter ces inconvénients de la technique antérieure.

Elle propose à cet effet un inverseur de poussée pour une nacelle de turboréacteur, selon la revendication 1.

Un avantage de cet inverseur est qu'en cas d'absence ou de rupture d'un vérin commandant l'ouverture d'un capot, le rail primaire prévu pour recevoir des efforts importants s'appliquant sur ce capot lors de son fonctionnement, dispose d'une résistance assez élevée pour pouvoir sans le modifier supporter la charge axiale supplémentaire s'appliquant sur cette butée. On réalise ainsi de manière simple, sans ajouter de masse importante, une butée qui limite le recul du capot, et permet d'éviter un déboîtement du rail secondaire guidant ce capot.

L'inverseur de poussée selon l'invention peut comporter de plus une ou plusieurs des caractéristiques suivantes, qui peuvent être combinées entre elles.

La butée de fin de course comporte un moyen mobile permettant de la désactiver, ce qui permet de retirer facilement le capot pour des opérations de maintenance.

Avantageusement, la butée de fin de course comporte un moyen de blocage permettant de la maintenir dans la position désactivée, qui facilite la manoeuvre de retrait du capot.

Le moyen de blocage peut comporter un ressort qui maintient ce moyen dans une position de blocage.

En particulier le moyen mobile peut comporter un doigt d'arrêt coulissant, comprenant des rainures transversales dans lesquelles peuvent s'engager un axe formant le moyen de blocage. Ce système est simple à réaliser, et efficace.

L'inverseur de poussée comporte un moyen obligeant l'opérateur à remettre le moyen mobile de la butée de fin de course dans sa position activée avant de refermer l'ensemble de la nacelle. Ce moyen assure la sécurité en garantissant le fonctionnement de la butée lors des vols.

En particulier quand la nacelle est entièrement refermée, dans une position où la butée est désactivée, le doigt d'arrêt peut être positionné pour générer une interférence avec un panneau extérieur de cette nacelle.

Avantageusement le capot étant ouvert, un petit jeu axial interposé entre la partie mobile et la partie fixe de la butée de fin de course, est calculé au minimum en fonction des tolérances et des déformations des différents éléments, pour que lors d'un fonctionnement normal ces parties ne viennent pas en contact. On évite ainsi un choc important sur cette butée.

L'invention a aussi pour objet une nacelle de turboréacteur comprenant un inverseur de poussée pouvant coulisser axialement sous l'effet d'un actionneur, remarquable en ce que cet inverseur comporte l'une quelconque des caractéristiques précédentes.

Avantageusement, après l'absence ou la rupture d'un vérin de commande d'un capot, ce capot ouvert prenant une flexion, la butée mobile se trouvant en avance de phase par rapport au déplacement normalement prévu du capot, le jeu est calculé pour une ouverture réelle du capot un peu inférieure à 100%. Ce jeu permet de recevoir le choc sur la butée avant une montée en régime importante du turboréacteur.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est une vue déformée d'une nacelle comportant un inverseur de poussée comprenant deux capots ne disposant pas de butée de fin de course, après l'absence ou la rupture d'un vérin supérieur d'un capot.
- la figure 2 est une vue d'un capot fermé pour un inverseur selon l'invention ;
- la figure 3 est une vue de détail du rail primaire de ce capot ;
- les figures 4a et 4b sont des vues de côté de ce rail primaire, le capot étant respectivement dans une position fermée et une position ouverte ;
- les figures 5a, 5b et 5c sont des schémas présentant en fonction du temps, la vitesse de rotation du turboréacteur ainsi que la charge sur la butée de fin de course, pour respectivement une ouverture normale de cet inverseur, une ouverture après l'absence ou la rupture d'un vérin supérieur avec un jeu axial faible de la butée, et une ouverture avec un jeu axial important ;
- la figure 6 est une vue de détail de la butée de fin de course ;
- les figures 7a à 7d présentent successivement quatre positions de la butée fixe lors d'une opération de dépose complète du capot ; et
- les figures 8a et 8b présentent un dispositif de sécurité de la butée fixe, mis en oeuvre lors de cette dépose complète.

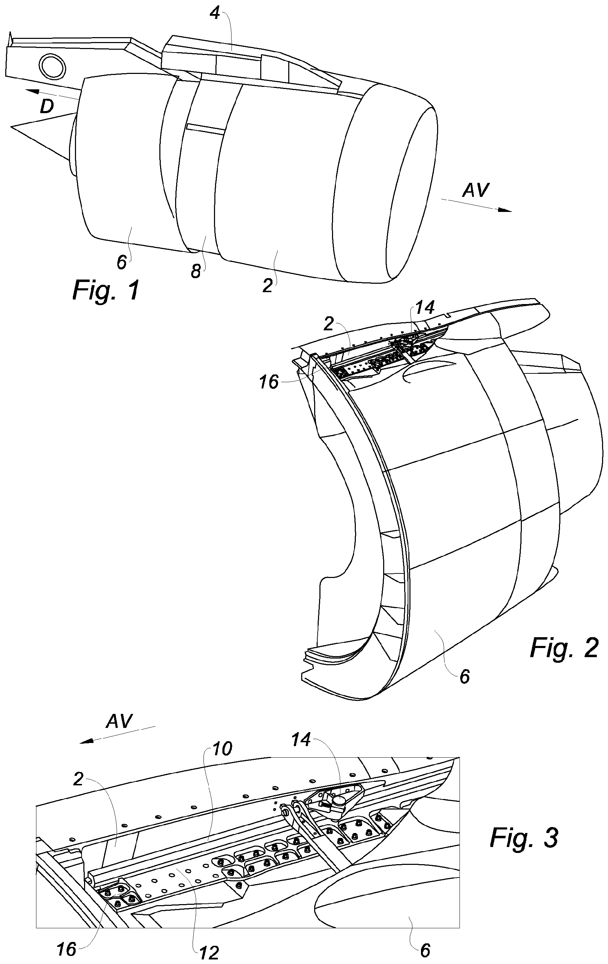

La figure 1 présente une nacelle comportant une structure fixe 2 maintenue sous l'aile d'un avion par un pylône 4, et un inverseur de poussée disposé à l'arrière de cette nacelle, comprenant deux capots 6 du type « D-duct » qui sont ouverts pour activer l'inverseur, en découvrant des grilles d'inversion du flux 8. Le recul de chaque capot 6 est commandé par un vérin supérieur et un vérin inférieur, ces deux capots n'étant pas reliés entre eux par une liaison directe dans leurs parties supérieures.

Le panneau extérieur du capot 6 comporte un rail secondaire non visible, qui soutient et guide la partie avant de ce panneau lors du recul du capot.

En cas d'absence ou de rupture du vérin supérieur avec l'inverseur ouvert, on obtient comme présenté par la flèche « D » un recul de la partie supérieure du capot 6 dû à sa masse, et aux différents efforts qui s'appliquent dessus au cours du vol. En l'absence de butée de fin de course du capot 6, le basculement de ce capot peut être important, et le rail secondaire le guidant se déboîte.

Les figures 2 et 3 présentent un rail primaire longitudinal de guidage principal du capot 6, qui le supporte dans sa partie supérieure, comprenant un rail fixe 10 qui est relié à une partie fixe supérieure de la nacelle 2, et un rail mobile 12 coulissant dans ce rail fixe, qui supporte le capot.

Le rail fixe 10 comporte une butée fixe 14, qui forme un arrêt arrière d'une butée mobile 16 disposée sur le rail mobile 12.

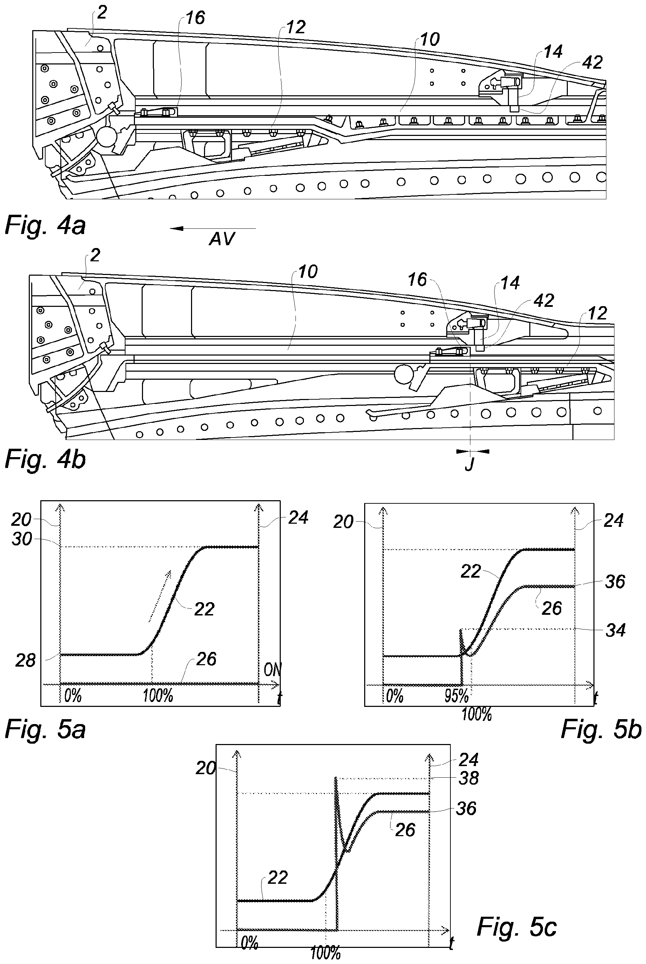

La figure 4a présente le capot fermé, la butée mobile 16 disposée à l'avant du rail mobile 12, comporte un talon arrière qui se trouve à la hauteur de l'extrémité inférieure d'un pion vertical 42 de la butée fixe 14.

La figure 4b présente le capot ouvert lors du fonctionnement normal de l'inverseur de poussée, le talon arrière de la butée mobile 16 venant juste en avant du pion vertical 42 de la butée fixe 14, avec un petit jeu axial « J » interposé entre eux.

Les figures 5a, 5b et 5c présentent en fonction du temps t, une courbe 22 de vitesse de rotation du turboréacteur, cette vitesse étant mesurée sur l'axe vertical gauche 20, et une courbe de charge 26 appliquée sur la butée fixe de fin de course 14, cette charge étant mesurée sur l'axe vertical droit 24.Le volet est fermé au départ avec une ouverture de 0%, puis s'ouvre progressivement pour atteindre une ouverture complète de 100%.

Dans le cas d'un fonctionnement normal, présenté par la figure 5a, les vérins déplacent les capots pendant que le turboréacteur est à une vitesse de ralenti 28, sans exercer de poussée importante sur les volets de l'inverseur pour faciliter cette manoeuvre. Un peu avant l'ouverture complète de 100%, le turboréacteur est relancé pour obtenir au plus tôt une vitesse maximum 30 donnant une puissance élevée, à laquelle correspond une charge axiale maximum sur le capot, afin de freiner rapidement l'aéronef.

Le jeu J est calculé au minimum en fonction des tolérances et des déformations des différents éléments, pour que lors d'un fonctionnement normal, dans tous les cas la butée mobile 16 ne vienne pas en contact sur la butée fixe 14. Les vérins de commande des capots 6 réalisent la fin de course de ces capots, la charge sur ces butées 26 reste nulle.

Dans le cas d'une rupture d'un vérin de commande supérieur, présenté par la figure 5b, le capot 6 prenant une flexion vers l'arrière, la butée mobile 16 se trouve en avance de phase par rapport au déplacement normalement prévu de ce capot. Le jeu J calculé au minimum, permet à cette butée mobile 16 de venir en appui sur la butée fixe 14 pour une ouverture réelle du capot un peu inférieure à 100%, qui est dans cet exemple de 95%.

On obtient alors un pic 34 de charge sur la butée 26 lors de l'arrêt du capot 6, venant de son inertie, se produisant avant l'augmentation de la vitesse du turboréacteur 22 qui s'accompagne de fortes pressions aérodynamiques sur l'inverseur. La charge sur la butée 26 monte ensuite en fonction de la force développée par les vérins et des pressions aérodynamiques, pour se stabiliser à une charge 36 supérieure à la valeur du pic 34.

Le pic 34 n'a pas appliqué de surcharge sur la butée de fin de course. On réalise ainsi une protection de cette butée de fin de course, qui ne reçoit pas une force supérieure à celle générée par le turboréacteur à sa vitesse maximum 30.

Dans le cas d'absence ou de rupture d'un vérin avec un jeu J trop important, présenté par la figure 5c, l'arrêt sur la butée de fin de course 14 arrive trop tard, après une ouverture théorique complète de 100% du capot 6, alors que la vitesse ainsi que la puissance du turboréacteur ont nettement augmentées.

La butée de fin de course 14 reçoit alors un pic de charge élevé 38 dépassant la charge finale 36, venant de l'inertie du capot 6 et des pressions aérodynamiques données par le flux d'air délivré par le turboréacteur. Il faut alors un dimensionnement supérieur de cette butée.

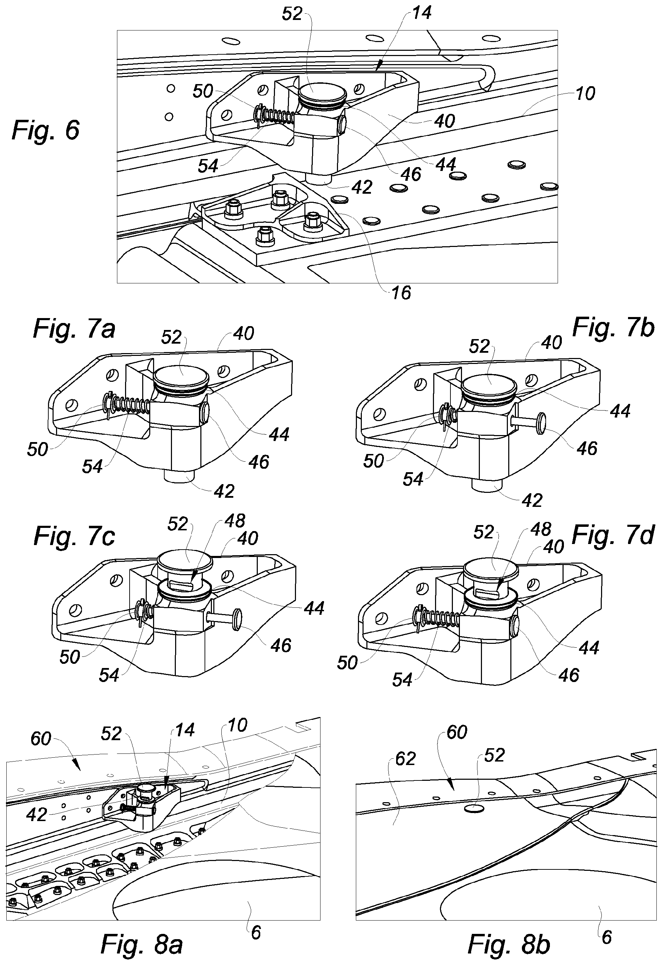

Les figures 6 et 7 présentent la butée fixe 14 comprenant un support 40 fixé sur le rail fixe 10, qui reçoit dans un alésage vertical le doigt d'arrêt coulissant 42, présentant un rebord supérieur 52 formant une butée pour ce doigt en position basse, ainsi qu'une poignée de préhension permettant à un opérateur de soulever le doigt. Une rondelle 44 est interposée entre le rebord supérieur 52 et le support 40.

En position basse le doigt d'arrêt 42 comporte son extrémité inférieure dépassant en dessous du support 40, qui se trouve à la hauteur du talon arrière de la butée mobile 16 pour l'arrêter dans sa fin de course.

Le support 40 comporte un perçage tangentiel recevant un axe horizontal de blocage coulissant 46, comprenant dans une position de repos une partie se trouvant vers l'arrière disposant d'un diamètre plus important ajusté dans le perçage tangentiel pour former un guidage, cette partie se terminant à son extrémité arrière par un rebord formant une butée de fin de course qui est en appui sur le support.

La partie de l'axe de blocage 46 comprenant le diamètre important forme aussi un blocage du doigt d'arrêt 42 en position basse, en venant s'engager dans une rainure transversale haute 48 réalisée sur ce doigt.

L'axe de blocage 46 comporte une partie avant d'un diamètre réduit, qui se termine à son extrémité avant par une bague d'arrêt 50 fixée par une goupille transversale. Un ressort hélicoïdal 54 est engagé sur cette partie de diamètre réduit afin d'exercer en permanence une force de rappel sur cet axe pour le caler vers l'avant, son rebord arrière étant en appui sur le support 40.

Le fonctionnement de la butée fixe 14 est le suivant. Dans une position de repos présentée figure 7a, le doigt de blocage 42 est dans sa position basse qui est verrouillée par la partie de diamètre important de l'axe de blocage 46, engagée dans la rainure haute 48 de ce doigt.

Pour retirer le capot de la nacelle en le faisant coulisser vers l'arrière afin de dégager le rail coulissant 12 du rail fixe 10, pour des opérations de maintenance, l'opérateur commence par appuyer sur l'axe de blocage 46 afin de le reculer vers l'arrière, comme présenté par la figure 7b, en comprimant le ressort de compression 54.

L'opérateur soulève ensuite le doigt d'arrêt 42 comme présenté figure 7c, en maintenant la pression sur l'axe de blocage 46 afin de laisser sa partie de diamètre réduit en face de ce doigt permettant un libre coulissement du doigt devant cet axe.

Pour la position finale présentée figure 7d, l'opérateur a relâché l'axe de blocage 46 qui est rappelé vers l'avant par son ressort de compression 54. La partie de diamètre important de l'axe de blocage 46 vient s'engager dans une rainure transversale basse du doigt d'arrêt 42 identique à la rainure haute 48, afin de bloquer ce doigt dans une position haute permettant le libre passage de la butée mobile 16 en dessous de son extrémité inférieure.

On peut ainsi déboîter le rail primaire pour retirer le capot. Après la repose du capot, la remise en action de la butée se fait à l'inverse, en pressant à nouveau vers l'arrière sur l'axe de blocage 46 pour permettre la descente du doigt d'arrêt 42, puis en relâchant cet axe afin de verrouiller le doigt dans sa position basse.

La figure 8a présente le doigt d'arrêt 42 dans sa position haute, comprenant son rebord supérieur 52 qui se trouve au niveau de la surface extérieure 60 d'une partie supérieure de la nacelle supportant le rail fixe 10.

Dans cette position prévue pour déposer le capot 6, l'opérateur ne peut pas replacer un capot externe 62 présenté figure 8b, venant se remettre en position après la repose du capot, qui complète le profil aérodynamique extérieur de la nacelle en s'ajustant au niveau de la surface extérieure 60. Cette figure présente l'interférence entre le rebord supérieur 52 du doigt d'arrêt 42 et le panneau 62.

On réalise ainsi une sécurité obligeant l'opérateur à remettre la butée fixe 14 dans sa position d'origine avant de refermer l'ensemble de la nacelle, pour garantir le fonctionnement de la butée de fin de course lors des vols suivants.

L'invention réalise de manière simple et efficace une butée de fin de course qui peut être posée facilement sur un rail primaire comprenant une résistance élevée. On n'a pas à modifier le rail secondaire du capot qui n'est pas conçu pour recevoir des fortes charges axiales.

L'invention s'applique à des inverseurs de poussée comprenant un unique capot du type « O-duct », ou deux capots du type « D-duct », ces deux capots étant indépendants, ou comprenant des liaisons directes entre eux. Elle peut s'appliquer aussi pour différentes commandes de capots, quels que soient le type d'actionneur et le nombre de vérins, s'il est nécessaire de réaliser une butée arrière de sécurité en cas d'absence ou de rupture d'un vérin.

## Revendications

1. - Inverseur de poussée pour une nacelle de turboréacteur, comprenant des capots (6) reculant vers l'arrière pour ouvrir cet inverseur, chaque capot comportant un rail primaire (10, 12) de guidage axial qui supporte principalement la charge de ce capot, et un rail secondaire guidant une partie extérieure du capot, une butée de fin de course arrière (14, 16) du capot (6) étant disposée sur le rail primaire (10, 12), et un moyen mobile (42) permettant de la désactiver, **caractérisé en ce qu'**il comporte un moyen obligeant un opérateur à remettre le moyen mobile (42) de la butée de fin de course (14) dans sa position activée avant de refermer l'ensemble de la nacelle.

2. - Inverseur de poussée selon la revendication 1, **caractérisé en ce que** la butée de fin de course comporte un moyen de blocage (46) permettant de la maintenir dans la position désactivée.

3. - Inverseur de poussée selon la revendication 2, **caractérisé en ce que** le moyen de blocage (46) comporte un ressort (54) qui maintient ce moyen dans une position de blocage.

4. - Inverseur de poussée selon la revendication 2 ou 3, **caractérisé en ce que** le moyen mobile comporte un doigt d'arrêt coulissant (42), comprenant des rainures transversales (48) dans lesquelles peuvent s'engager un axe (46) formant le moyen de blocage.

5. - Inverseur de poussée selon les revendications 1 et 4, **caractérisé en ce que** quand la nacelle est entièrement refermée, dans une position où la butée est désactivée, le doigt d'arrêt (42) est positionné pour générer une interférence avec un panneau extérieur (62) de cette nacelle.

6. - Inverseur de poussée selon l'une quelconque des revendications précédentes, **caractérisé en ce que** le capot (6) étant ouvert, un petit jeu axial (J) interposé entre la partie mobile (16) et la partie fixe (14) de la butée de fin de course, est calculé au minimum en fonction des tolérances et des déformations des différents éléments, pour que lors d'un fonctionnement normal ces parties ne viennent pas en contact.

7. - Nacelle de turboréacteur comprenant un inverseur de poussée pouvant coulisser axialement sous l'effet d'un actionneur, **caractérisée en ce que** cet inverseur est réalisé selon l'une quelconque des revendications précédentes.

8. - Nacelle de turboréacteur selon la revendication 7, **caractérisée en ce qu'**après l'absence ou la rupture d'un vérin de commande d'un capot (6), ce capot ouvert prenant une flexion, la butée mobile (16) se trouvant en avance de phase par rapport au déplacement normalement prévu du capot, le jeu (J) est calculé pour une ouverture réelle du capot un peu inférieure à 100%.

## Patentansprüche

1. Schubumkehr für eine Turbotriebwerksgondel, Verkleidungen (6) umfassend, die nach hinten geschoben werden, um diese Umkehr zu öffnen, wobei jede Verkleidung eine Primärschiene (10, 12) zur axialen Führung umfasst, die hauptsächlich die Last dieser Verkleidung trägt, und eine Sekundärschiene, die einen äußeren Abschnitt der Verkleidung leitet, wobei ein hinterer Endlagenanschlag (14, 16) der Verkleidung (6) auf der Primärschiene (10, 12) angeordnet ist, und ein bewegliches Mittel (42) deren Deaktivierung ermöglicht, **dadurch gekennzeichnet, dass** sie ein Mittel umfasst, das einen Bediener dazu zwingt, das bewegliche Mittel (42) des Endlagenanschlags (14) in seine aktivierte Position zurückzusetzen, bevor er die Gondeleinheit wieder schließt.

2. Schubumkehr nach Anspruch 1, **dadurch gekennzeichnet, dass** der Endlagenanschlag ein Blockiermittel (46) umfasst, anhand dessen er in der deaktivierten Position gehalten werden kann.

3. Schubumkehr nach Anspruch 2, **dadurch gekennzeichnet, dass** das Blockiermittel (46) eine Feder (54) umfasst, die dieses Mittel in einer Blockierposition hält.

4. Schubumkehr nach Anspruch 2 oder 3, **dadurch gekennzeichnet, dass** das bewegliche Mittel einen verschiebbaren Arretierstift (42) umfasst, der quer verlaufende Rillen (48) umfasst, in die eine Achse (46) eingeführt werden kann, die das Blockiermittel bildet.

5. Schubumkehr nach den Ansprüchen 1 und 4, **dadurch gekennzeichnet, dass**, wenn die Gondel vollständig geschlossen ist, in einer Position, in welcher der Anschlag deaktiviert ist, der Arretierstift (42) positioniert ist, um eine Störkontur mit einem Außenblech (62) dieser Gondel zu erzeugen.

6. Schubumkehr nach einem der vorhergehenden Ansprüche, **dadurch gekennzeichnet, dass** wenn die Verkleidung (6) offen ist, ein geringes axiales Spiel (J), das zwischen dem beweglichen Abschnitt (16) und dem festen Abschnitt (14) des Endlagenanschlags vorhanden ist, je nach den Toleranzen und den Verformungen der verschiedenen Elemente auf ein Minimum berechnet wird, damit sich diese Abschnitte in einem Normalbetrieb nicht berühren.

7. Turbotriebwerksgondel, eine Schubumkehr umfassend, die unter der Einwirkung eines Stellers axial verschoben werden kann, **dadurch gekennzeichnet, dass** diese Umkehr nach einem der vorhergehenden Ansprüche gefertigt ist.

8. Turbotriebwerksgondel nach Anspruch 7, **dadurch gekennzeichnet, dass** nach der Abwesenheit oder dem Bruch eines Steuerzylinders einer Verkleidung (6), wodurch diese offene Verkleidung eine Biegung annimmt, und der bewegliche Anschlag (16) im Verhältnis zur normalerweise vorgesehenen Bewegung der Verkleidung in der Phase etwas vorauseilt, das Spiel (J) für eine tatsächliche Öffnung der Verkleidung etwas unter 100% berechnet wird.

## Claims

1. A thrust reverser for a turbojet engine nacelle, comprising cowls (6) moving backwards in order to open this thrust reverser, each cowl including a primary axial guide rail (10, 12) which mainly supports the load of this cowl, and a secondary rail guiding an outer portion of the cowl, a rear end-of-travel stop (14, 16) of the cowl (6) being disposed on the primary rail (10, 12), and a movable means (42) allowing deactivating it, **characterized in that** it includes means obliging an operator to return the movable means (42) of the end-of-travel stop (14) to the activated position thereof before closing the assembly of the nacelle.

2. The thrust reverser according to claim 1, **characterized in that** the end-of-travel stop includes a blocking means (46) allowing holding it in the deactivated position.

3. The thrust reverser according to claim 2, **characterized in that** the blocking means (46) includes a spring (54) which holds this means in a blocking position.

4. The thrust reverser according to claim 2 or 3, **characterized in that** the movable means includes a sliding stop finger (42), comprising transverse grooves (48) in which an axis (46) forming the locking means may be engaged.

5. The thrust reverser according to claims 1 and 4, **characterized in that** when the nacelle is completely closed, in a position where the stop is deactivated, the stop finger (42) is positioned to generate an interference with an outer panel (62) of this nacelle.

6. The thrust reverser according to any one of the preceding claims, **characterized in that** the cowl (6) being open, a small axial clearance (J) interposed between the movable part (16) and the fixed part (14) of the end-of-travel stop, is calculated at minimum depending on the tolerances and the deformations of the different members, so that upon normal operation these parts do not come into contact.

7. A turbojet engine nacelle comprising a thrust reverser which can axially slide under the effect of an actuator, **characterized in that** this thrust reverser made according to any one of the preceding claims.

8. The turbojet engine nacelle according to claim 7, **characterized in that** after the absence or the breaking of a control cylinder of a cowl (6), this open cowl is bent, the movable stop (16) being phase-advanced relative to the normally expected displacement of the cowl, the clearance (J) is calculated for a real opening of the cowl slightly lower than 100%.
